# EUROPEAN PATENT SPECIFICATION

(11) **EP 2 231 422 B1**
(45) Date of publication and mention of the grant of the patent: **25.07.2012**
(21) Application number: 08864904.1
(22) Date of filing: 04.11.2008
(51) Int. Cl.: B60C 1/00, C08K 3/36, C08L 9/00, C08L 21/00, B60C 17/08, C08K 3/00, C08L 7/00, C08L 9/02, C08L 9/06, C08L 23/16, C08L 23/22

(54) **RUN-FLAT TIRE**
RUN-FLAT-REIFEN
PNEU À AFFAISSEMENT LIMITÉ

(30) Priority: 19.12.2007 WO PCT/EP2007/064153
(43) Date of publication of application: 29.09.2010
(73) Proprietor: Pirelli Tyre S.P.A., 20126 Milan (IT)
(72) Inventor: GIANNINI, Luca, I-20126 Milano (IT); NAHMIAS NANNI, Marco, I-20126 Milano (IT); DEMERGAZZI, Andrea, I-20126 Milano (IT); GALIMBERTI, Maurizio, I-20126 Milano (IT)
(74) Representative: Allaix, Roberto
(86) International application number: PCT/EP2008/009278
(87) International publication number: WO 2009/080144

(56) References cited:
- WO-A-2006/010479
- CN-A- 1 587 304
- US-A1- 2007 155 889
- DATABASE WPI Week 200545 Thomson Scientific, London, GB; AN 2005-444533 XP002513161 & WO 2005/047028 A (YAMAMOTO A) 26 May 2005 (2005-05-26)

## Description

### Field of the invention

The present invention relates to a run-flat tire comprising a crosslinked bearing structure obtained by crosslinking a crosslinkable elastomeric composition comprising diatomite particles.

More in particular the invention relates to a run-flat tire including at least a bearing structure including bead structures and sidewall inserts and obtained by crosslinking a crosslinkable elastomeric composition comprising diatomite particles.

### Background of the invention

Run-flat tires are pneumatic tires capable of bearing the vehicle load under a considerable or total loss of pressure, allowing the driver to travel, for a certain distance, to reach a repairing point without having to stop for changing the tire in a possible dangerous situation.

The structure of a run-flat tire has sufficient strength to preclude to sidewalls and internal surfaces to collapse or buckle onto themselves when the tire is operated in the deflated state and, on the other hand, when the tire is under normal-inflated operating conditions, the structure is capable of imparting favourable qualities of comfort and rolling resistance.

Several techniques have been used to obtain the aforesaid bearing effect without impairing the normal travelling conditions.

In United States Patent US 6,453,961, a pneumatic radial ply run flat tire for a vehicle has a tread, a carcass comprising at least one radial ply and two sidewalls each reinforced by a circumferentially disposed crescent-shaped wedge insert. Each insert has an elastomeric porous section embedded in an elastomeric stiffer layer of the insert. When the tire is normally inflated, the porous section, and hence the insert as a whole, is flexible, thereby providing comfortable driving characteristics. Under runflat (deflated tire) conditions, the pores in the porous section collapse, and the porous section stiffens, and hence the insert as a whole becomes stiff enough to support the load of the vehicle.

The tire according to the International Patent Application WO 00/69661 incorporates a carcass ply cord material with variable modulus of elasticity to provide an active sidewall structure. The variable modulus cord material is incorporated in the axially outwardmost ply of a carcass having two plies separated by elastomeric inserts in the sidewalls. The outer ply cord material provides an increased modulus of elasticity with an increase in elongation. The inner ply cords have a modulus that substantially exceeds that of the outer ply cords under normal loads in the inflated mode. Thus, the inner ply dominates the structural response of the sidewalls at normal loads in the inflated mode. Under severe sidewall deflection, such as when the tire is uninflated, the outer ply cord is elongated, increasing its modulus of elasticity and thus, shifting the load from the axially inwardmost ply to the axially outwardmost ply.

Both the teachings of the above cited documents are based on the effect of varying the tire rigidity as a consequence of crushing the sidewall.

In another approach according to the prior art, a run flat capability is secured by reinforcing sidewalls with a specific insert rubber.

In US2007012391, a tyre, suitable for extended-mobility travel, includes sidewalls reinforced by a sidewall insert, namely an inner insert in the inner sidewall, and an outer insert in the outer sidewall. The inserts are made of rubber composition enabling the sidewalls to bear a load corresponding to part of the weight of the vehicle in a situation in which the inflation pressure is substantially reduced or zero.

In general the annular sidewall reinforcement element, i.e. the sidewall insert, operates in supporting the tire when deflated, and needs to be made of a material of high modulus, low hysteresis and good elongation at break, mainly to allow for tire mounting/demounting on the rim. Viscosity of the compound should be low, especially if an automated system is used as tire building technology.

In standard rubber technology high modulus and low hysteresis are obtained at the expense of elongation at break.

In fact, high modulus can be obtained, normally by the use of high amount of vulcanizing agents (sulfur/accelerants), for example, static and dynamic moduli of the elastomeric compositions may be increased by increasing crosslinking density of these compositions.

The enhancement of crosslinking density can be obtained by using a large amount of sulfur, or by using a large amount of carbon black, or a very fine and structured carbon black, and also by using a large amount of reinforcing fillers, or finally by using reinforcing resins. However, the above ways of increasing static and dynamic moduli may lead to a number of drawbacks.

For example, it is known that the use of a large amount of sulfur may cause remarkable reversion phenomena, which result in modification of the tires performances during use. On the other side, it is known that carbon black gives the crosslinked manufactured products pronounced hysteresis properties, that is to say an increase in the dissipated heat under dynamic conditions, which results in an increase in the rolling resistance of the tire and the fuel consumption. In addition, a large amount of carbon black causes an increase in the viscosity of the elastomeric composition and, consequently, has a negative impact on the processability and extrudability of the crosslinkable elastomeric composition.

To overcome the drawbacks caused by the use of carbon black, the so-called "white" reinforcing fillers are usually used, in particular silica, in total or partial replacement for the carbon black. However, although the use of said reinforcing fillers leads to good rolling resistance, it also entails a series of drawbacks essentially related to the poor affinity of these fillers with respect to the elastomeric polymers commonly used in the production of tires. In particular, to obtain a good degree of dispersion of the silica in the elastomeric polymers, it is necessary to subject the elastomeric compositions to a prolonged thermo mechanical blending action. To increase the affinity of the silica with the elastomeric polymers, it is necessary to use suitable coupling agents, such as, for example, sulfur-containing organosilane products. However, the need to use such coupling agents places a limitation on the maximum temperature which may be reached during the blending and thermo mechanical processing operations of the elastomeric compositions, to avoid the penalty of an irreversible thermal degradation of the coupling agents. Moreover, the processability of such crosslinkable elastomeric compositions comprising reinforcing fillers such as carbon black and/or silica may require high temperatures, but this implies a reduction of the productivity, excessive power consumption, and an increased risk of forming defects due to a partial early crosslinking ("scorching phenomena").

Usually, the above mentioned problems have been tackled by the addition of salts of fatty acids with sodium or zinc (soaps) or by the addition of lubricants or oils that can reduce the viscosity and increase the flowability. However, the use of such ingredients involves the problem of a reduction of the tensile modulus and an increase in hysteresis of the resulting crosslinked elastomeric compositions.

Furthermore the use of large amount of fillers can entail thermoplasticity and high viscosity values, on the contrary low thermoplasticity can be achieved by silica fillers, which as discussed above worsen the problem of viscosity.

Reinforcing resins lead to high hysteresis and thermoplasticity, generally not desired in particular for sidewall reinforcement compounds.

Viscosity can be improved by the use of plasticizers, but plasticizers also bring hysteresis, which is highly detrimental to run-flat performances.

On the other hand a high amount of vulcanizing agents is effective in obtaining high modulus and low hysteresis, expecially when associated to a low tg polymeric base such as Polyisoprene/Polybutadiene, but compounds with suitable high modulus and low hysteresis based on Polyisoprene/Polybutadiene polymers, with moderate filler amount and high level of vulcanizing agents suffer of very poor properties at break while still being of rather high viscosity.

US 2007006956 tackles the aforesaid problems concerning fillers and additives in a different way: a self-supporting type pneumatic run-flat tire comprises a sidewall insert and bead rubber composition which comprises syndiotactic 1,2-polybutadiene in place of the conventional reinforcing filler in order to allow only a small amount of filler to be filled in the tire.

On the other hand the use of diatomaceous earth as filler is known for improving the mechanical properties of a tire tread. In WO2008/078822 a rubber composition for a tire is disclosed which comprises: 100 parts by weight of a rubber component comprising a natural rubber and/or a diene-type synthetic rubber; and (a) 0.5 to 40 parts by weight of a porous diatomaceous earth having a shape of a hollow or solid cylinder and having the height of the hollow or solid cylinder of 100 µm or less, and (b) (i) carbon black and/or (ii) silica, wherein the total amount of the components (a) and (b) is 40 to 80 parts by mass. The rubber composition is said to show an improved frictional force on ice without deteriorating the abrasion resistance or strength and, in the specifications, is said to be particularly useful for treads or studlless tires.

In WO2005/047028 diasomaceous earth is used as a lubricant in order to improve the rolling properly of a tire tread.

### Summary of the invention

The Applicant has faced the problem of obtaining a run flat tire comprising a bearing structure showing enhanced mechanical properties, in particular elongation at break and reduced hysteresis, to minimize the excessive heat generated during the running in deflated condition, without a negative impact on the workability of the crosslinkable elastomeric composition used in the bearing structure.

The Applicant has now found that the use of diatomite particles, having a particular BET surface area, as a filler, in combination with standard fillers, in crosslinkable elastomeric compositions advantageously used in the production of structures such as a bearing structure of a run-flat tire, including at least one sidewall insert, allows for unprecedented balance among the above conflicting sought properties.

In particular the Applicant has found that by using in the crosslinkable elastomeric composition for the bearing structure, diatomite particles having a particular BET surface area as a filler, in combination with standard fillers, heat buildup and hysteresis can be reduced, highlighting thermomechanical stability, properties at break can be improved, while at the same time viscosity can be reduced with respect to standard formulations.

Accordingly, in a first aspect, the present invention relates to a run-flat tire comprising:
- a carcass structure, having opposite lateral edges associated with respective right-hand and left-hand bead structures;
- a tread band applied in a radially external position with respect to said carcass structure;
- a pair of sidewalls applied laterally on opposite sides with respect to said carcass structure;
- a bearing structure including, for each side of the tire, said bead structure cooperating in supporting the run-flat tire with at least one sidewall insert extending radially between said bead structure and the corresponding lateral edge of said tread band;
wherein said at least one sidewall insert includes a crosslinked elastomeric material obtained by crosslinking a crosslinkable elastomeric composition comprising:
(a) 100 phr of at least one elastomeric polymer;
(b) from about 20 phr to about 35 phr, preferably from 20 phr to 25 phr of diatomite particles having a BET surface area in the range of from 10 m²/g to 90 m²/g, preferably from 10 to 40 m²/g, more preferably from 30 to 40 m²/g;
(c) from 10 phr to 35 phr, preferably from 25 phr to 35 phr of at least one further reinforcing filler.

For the purposes of the present description and of the claims which follow, the term "maximum dimension" means the major dimension of a diatomite particle, independently from the measurement direction, and the term "average maximum dimension" means the average of the major dimensions measured by a microscopy technique in a representative sample of diatomite particles, for example by scanning electron microscopy (SEM) according to Standard: ISO 16700:2004.

For the purposes of the present description and of the claims which follow, the term "phr" (acronym of "parts per hundred of rubber") means the parts by weight of a given component of the crosslinkable elastomeric composition per 100 parts by weight of the elastomeric polymer(s).

For the purposes of the present description and of the claims which follow, the term BET surface area refers to the surface area of particles measured according to Standard ISO 5794-1:2005.

The present invention may show one or more of the preferred characteristics hereinafter described.

Typically, each bead structure includes a respective bead filler. In a preferred embodiment, both said at least one sidewall insert and the bead filler of said bead structure include a crosslinked elastomeric material obtained by crosslinking a crosslinkable elastomeric composition comprising:
(a) 100 phr of at least one elastomeric polymer;
(b) from about 20 phr to about 35 phr, preferably from 20 phr to 25 phr of diatomite particles having a BET surface area in the range of from 10 m²/g to 90 m²/g, preferably from 10 m²/g to about 40 m²/g, more preferably from 30 m²/g to 40 m²/g;
(c) from 10 phr to 35 phr, preferably from 25 phr to 35 phr of at least one further reinforcing filler.

Preferably, said diatomite particles (b) have a residue on a 325 Mesh sieve lower than or equal to about 2.5% by weight, more preferably lower than or equal to 1% by weight and even more preferably lower than or equal to about 0.5% by weight with respect to the total weight of the diatomite particles.

According to a preferred embodiment, said diatomite particles (b) may comprise any desired types of diatomaceous earths, provided that the above mentioned characteristics of BET surface area and, preferably, 325 Mesh sieve residue, are met.

Diatomaceous earth is a light colored, porous sedimentary silica deposit, composed of the fossilized skeletons of diatoms, single celled aquatic plants which accumulate in marine or fresh water environments laid down in the Miocene period, about 15 million years ago. Diatomaceous earth comprises a honeycomb silica structure comprising a multiplicity of pores having a diameter in the order of some nanometers (10 nm - 100 nm) providing high absorptive capacity and surface area. Diatomaceous earth contains 90% SiO₂ plus Al, Fe, Ca and Mg oxides. The evolution and different environments in which diatoms are found have resulted in a wide variety of size, shape and appearance in the silica skeletal structure. The diatomite particles useful in the present invention have mainly a rod or acicular shape with one dimension, i.e. the length, prevailing on the other two dimensions, i.e. width and thickness, or a disc or tabular shape with one dimension, i.e. the thickness, shorter than the other two dimensions, i.e. length and width.

Materials consisting, in part or totally, of fragments of diatomite particles having layered shape are also included in the present invention, provided that the above mentioned characteristics of BET surface area and, preferably, 325 Mesh sieve residue, are met.

According to a further preferred embodiment, said diatomite particles (b) have an average maximum dimension in the range of from about 2 µm to about 15 µm.

Examples of diatomite particles (b) above reported are commercially available, and may be purchased, for example, from Celite Corporation, or from Shengzhou Huali Diatomite Products Co., Ltd. Examples of commercial products which may be advantageously used according to the present invention are CelTix^{™} and Diafil^{®} 590 from Celite Corporation; or CD^{™} 120 from Shengzhou Huali Diatomite Products Co., Ltd.

According one preferred embodiment, said at least one further reinforcing filler (c) may be selected from carbon black, silica, nanosized layered material having an individual layer thickness of from about 0.01 nm to about 30 nm, or mixture thereof, in amounts from about 10 phr to about 35 phr and more preferably from about 25 phr to about 35 phr.

According to one preferred embodiment, said at least one further reinforcing filler (c) is carbon black selected from those having a surface area not lower than or equal to about 20 m²/g (determined by CTAB absorption as described in Standard ISO 6810:1995).

According to one preferred embodiment, said at least one further reinforcing filler (c) is silica that may be selected, for example, from: pyrogenic silica, precipitated amorphous silica, wet silica (hydrated silicic acid), dry silica (anhydrous silicic acid), fumed silica, or mixtures thereof.

Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates. The BET surface area, as measured according to Standard ISO 5794-1:2005, gives the best measure of the reinforcing character of different silicas.

Silica reinforcing fillers which may be advantageously used according to the present invention, preferably have a surface area of from 32 m²/g to 400 m²/g, more preferably from 100 m²/g to 250 m²/g, even more preferably from 150 m²/g to 220 m²/g. The pH of said silica reinforcing fillers is, generally, of from 5.5 to 7.0, preferably from 5.5 to 6.8.

Examples of silica reinforcing fillers which may be used according to the present invention and are available commercially are the products known by the name of Hi-Sil^{®} 190, Hi-Sil^{®} 210, Hi-Sil^{®} 215, Hi-Sil^{®} 233, Hi-Sil^{®} 243, from PPG Industries; or the products known by the name of Ultrasil^{®} VN2, Ultrasil^{®} VN3, Ultrasil^{®} 7000, from Degussa; or the product known under the name of Zeosil^{®} 1165MP from Rhodia.

Preferably the nanosized layered materials which may be advantageously used in the present invention have an individual layer thickness of from 0.2 nm to 15 nm, more preferably from 0.5 nm to 2 nm.

Nanosized layered materials which may be advantageously used in the present invention, may be selected, for example, from: phyllosilicates such as, for example, smectites, such as, montmorillonite, bentonite, nontronite, beidellite, volkonskoite, hectorite, saponite, sauconite; vermiculite; halloysite; sericite; aluminate oxides; hydrotalcite; or mixtures thereof. Montmorillonite is particularly preferred. These layered materials generally contain exchangeable ions such as sodium (Na⁺), calcium (Ca²⁺), potassium (K⁺), magnesium (Mg²⁺), hydroxide (HO⁻), or carbonate (CO₃²⁻), present at the interlayer surfaces. In order to render said layered materials more compatible with the elastomeric polymer(s) said layered materials may be treated with at least one compatibilizing agent which may be selected, for example, from the quaternary ammonium or phosphonium salts. The treatment of said layered materials with the compatibilizing agent may be carried out according to known methods such as, for example, by an ion exchange reaction between the layered material and the compatibilizer: further details are described, for example, in United States Patents US 4,136,103, US 5,747,560, or US 5,952,093.

Examples of layered materials reinforcing fillers which may be used in the present invention and are available commercially are the products known by the name of Dellite^{®} 67G, Dellite^{®} 72T, Dellite^{®} 43B, from Laviosa Chimica Mineraria S.p.A.; Cloisite^{®} 25A, Cloisite^{®} 10A, Cloisite^{®} 15A, Cloisite^{®} 20A, from Southern Clays; Nanofil^{®} 5, Nanofil^{®} 8, Nanofil^{®} 9, from Süd Chemie; Bentonite^{®} AG/3 from Dal Cin S.p.A.

Typically at least one coupling agent (d) capable of interacting with both the diatomite particles (b) and the reinforcing fillers (c) and of linking them to the elastomeric polymer(s) during the vulcanization is used.

Coupling agents (d) that are preferably used are those based on silane which may be identified, for example, by the following structural formula (I):

(R₂)₃Si-CₜH₂ₜ-X (I)

wherein the groups R₂, which may be equal or different from each other, are selected from: alkyl, alkoxy or aryloxy groups or from halogen atoms, on condition that at least one of the groups R₂ is an alkoxy or aryloxy group; t is an integer of from about 1 to about 6 extreme included; X is a group selected from: nitroso, mercapto, amino, epoxide, vinyl, imide, chloro, -(S)ᵤCₜH₂ₜ-Si-(R₂)₃ or or -S-COR₂ in which u and t are integers of from about 1 to about 6 extremes included and the groups R₂ are defined as reported above.

Advantageously said silane coupling agent is selected from bis(3-triethoxysilylpropyl) tetrasulfide or bis(3-triethoxysilylpropyl) disulfide.

The silane coupling agent (d) is added in an amount of at least 0.5 phr, preferably of from 0.5 phr to 3 phr.

According to another preferred aspect of the invention, said at least one elastomeric polymer is selected from the group comprising diene elastomeric polymers or copolymers having a glass transition temperature below about 20°C.

Advantageously said diene elastomeric polymers are selected from the group comprising: natural or synthetic cis-1,4-polyisoprene, 3,4-polyisoprene, polybutadiene, optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

Advantageously said at least one elastomeric polymer is selected form the group comprising elastomeric polymers of one or more monoolefins with an olefinic comonomer or derivatives thereof, preferably said elastomeric polymers are selected form the group comprising: ethylene/propylene copolymers (EPR), ethylene/propylene/diene copolymers (EPDM); poly-isobutene; butyl rubbers; halobutyl rubbers; or mixtures thereof.

According to one preferred embodiment, said at least one elastomeric polymer (a) may be selected, for example, from (a₁) diene elastomeric polymers which are commonly used in sulfur-crosslinkable elastomeric compositions, that are particularly suitable for producing tires, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene, or isoprene, are particularly preferred.

Monovinylarenes which may optionally be used as comonomers generally contain from about 8 to about 20, preferably from about 8 to about 12 carbon atoms, and may be selected, for example, from: stirene; 1-vinylnaphthalene; 2-vinylnaphthalene; various alkyl, cycloalkyl, aryl, alkylaryl or arylalkyl derivatives of stirene such as, for example, α-methylstirene, 3-methylstirene, 4-propylstirene, 4-cyclohexylstirene, 4-dodecylstirene, 2-ethyl-4-benzylstirene, 4-p-tolylstirene, 4-(4-phenylbutyl)stirene, or mixtures thereof. Stirene is particularly preferred.

Polar comonomers which may optionally be used may be selected, for example, from: vinylpyridine, vinylquinoline, acrylic acid and alkylacrylic acid esters, or mixtures thereof, such as, for example, methyl acrylate, ethyl acrylate, methyl methacrylate, ethyl methacrylate, or mixtures thereof.

Preferably, said diene elastomeric polymer (a₁) may be selected, for example, from: cis-1,4-c (natural or synthetic, preferably natural rubber), 3,4-polyisoprene, polybutadiene (in particular, polybutadiene with a high 1,4-cis content), optionally halogenated isoprene/isobutene copolymers, stirene/1,3-butadiene copolymers, stirene/isoprene/1,3-butadiene copolymers, or mixtures thereof.

Alternatively, said at least one elastomeric polymer (a) may be selected, for example, from (a₂) elastomeric polymers of one or more monoolefins with an olefinic comonomer or derivatives thereof. The monoolefins may be selected, for example, from: ethylene and α-olefins generally containing from about 3 to about 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from about 4 to about 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); poly-isobutene; butyl rubbers; halobutyl rubbers, in particular chlorobutyl or bromobutyl rubbers; or mixtures thereof.

Mixtures of the abovementioned diene elastomeric polymers (a₁) with the abovementioned elastomeric polymers (a₂), may also be used.

The above reported elastomeric polymers (a) may optionally be functionalized by reaction with suitable terminating agents or coupling agents. In particular, the diene elastomeric polymers (a₁) obtained by anionic polymerization in the presence of an organometallic initiator (in particular, an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof.

At least one condensation catalyst (e) in amounts of from 0 phr to 5 phr, more preferably from 0.5 phr to 2 phr may be advantageously incorporated capable of improving the interaction of with both the diatomite particles (b) and the reinforcing fillers (c) and of linking them to the elastomeric polymer(s) during the vulcanization.

According to one preferred embodiment, said condensation catalyst (e) may be selected, for example, from: metal carboxylates; arylsulphonic acids or derivatives thererof; amines and alkanolamines; strong inorganic acids or bases; organic acids; blocked acids; zeolites modified by reaction with at least one carboxylic acid and/or sulphonic acid; or mixtures thereof. Metal carboxylates are particularly preferred, dibutyltin dilaurate is even particularly preferred.

A more detailed description of said condensation catalysts may be found for example, in European Patent Application EP 1,252,230.

The run flat tire of the present invention can be obtained by known techniques of vulcanization, in particular with sulfur-based vulcanizing systems commonly used for elastomeric polymers. To this end, in each of the elastomeric compositions possibly used, including the composition of the bearing structure of the run flat tire, after one or more steps of thermomechanical processing, a sulfur-based vulcanization agent is incorporated together with vulcanization accelerators. In the final processing step, the temperature is generally kept below 120°C and preferably below 100°C, so as to avoid any unwanted pre-crosslinking phenomena.

The vulcanization agent most advantageously used is sulfur, or molecules containing sulfur (sulfur donors), with vulcanization accelerators and vulcanization activators known to those skilled in the art.

Vulcanization activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Vulcanization accelerators that are commonly used may be selected from: dithiocarbamates, guanidine, thiourea, thiazoles, sulfenamides, thiurams, amines, xanthates, or mixtures thereof.

Other commonly used additives, selected on the basis of the specific application for which each of the elastomeric compositions present is intended, may also be included in the composition included of the bearing structure of the run flat tire. For example, the following may be added: antioxidants, anti-ageing agents, plasticizers, adhesives, antiozonants (in particular, of the p-phenylenediamine type), waxes, modifying resins, fibers, or mixtures thereof.

For the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to the crosslinkable elastomeric composition of the bearing structure of the run flat tire. The amount of plasticizer generally ranges of from about 0 phr to 70 phr, preferably from of 1 phr to 30 phr.

The crosslinkable elastomeric composition to be crosslinked for obtaining the bearing structure of the run-flat tire according to the invention may be prepared by mixing together the elastomeric polymer(s), the diatomite particles (b) and the further reinforcing fillers (c) above reported, with the other additives optionally present, according to techniques known in the art.

The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw or multi-screw type.

Alternatively, the diatomite particles (b) may be pre-mixed with the elastomeric polymer(s) so as to form a masterbatch which will be subsequently mixed with the remaining components of the crosslinkable elastomeric composition to be crosslinked for obtaining the bearing structure of the run-flat tire according to the invention.

The process for producing the tire according to the present invention may be carried out according to techniques and using apparatus that are known in the art, said process including manufacturing a green tire, and subsequently moulding and vulcanizing the green tire.

### Brief description of the drawings

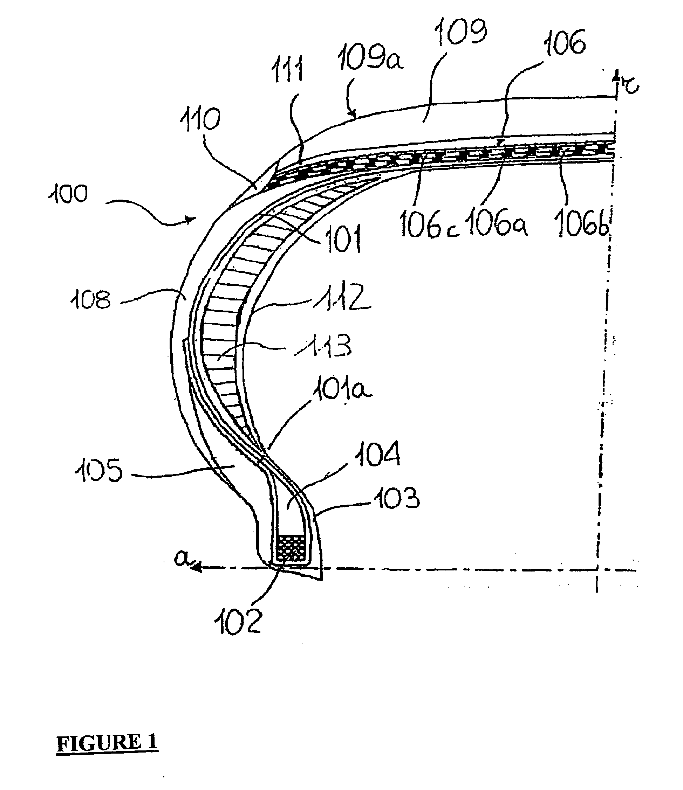

The present invention will now be illustrated in further detail by means of illustrative embodiments, with reference to the attached figure 1, which is a view in cross-section of a portion of a run-flat tire according to an embodiment of the present invention.

### Detailed description of the preferred embodiments

With reference to Fig. 1, "a" indicates an axial direction and "r" indicates a radial direction. For simplicity, Fig. 1 shows only a portion of the run-flat tire, the remaining portion not represented being identical and symmetrically arranged with respect to the radial direction "r".

The run-flat tire (100) comprises at least one carcass ply (101), the opposite lateral edges of which are associated with respective bead structures (103) comprising at least one bead core (102) and at least one bead filler (104). The association between the carcass ply (101) and the bead core (102) is achieved here by turning back the opposite lateral edges of the carcass ply (101) around the bead core (102) so as to form the so-called carcass turn-up (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 or EP 928,702).

The carcass ply (101) usually comprises a plurality of reinforcing cords arranged parallel to each other and at least partially coated with a layer of a crosslinked elastomeric composition. These reinforcing cords are usually made of textile fibers, for example rayon, nylon or polyethylene terephthalate, or of steel wires stranded together, coated with a metal alloy (for example, copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction.

The bead core (102) is enclosed in a bead structure (103), defined along an inner circumferential edge of the run-flat tire (100), with which the tire engages on a rim (not represented in Fig. 1) forming part of a vehicle wheel. The space defined by each carcass turn-up (101a) contains a bead filler (104).

An anti-abrasive layer (105), is usually placed in an axially external position relative to the carcass turn-up (101a).

A belt structure (106) is applied along the circumference of the carcass ply (101). In the particular embodiment of Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b), at least one zero-degree reinforcing layer (106c) may optionally be applied, commonly known as a "0° belt", which generally incorporates a plurality of reinforcing cords, typically textile cords, arranged at an angle of a few degrees, typically in a range of from 0 to 5 degrees relative to a circumferential direction, usually coated with a crosslinked elastomeric composition.

A tread band (109), whose lateral edges are connected to the sidewalls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of ribs and/or blocks of various shapes and sizes distributed over the rolling surface (109a) are generally made in this surface (109a), which is represented for simplicity in Fig. 1 as being smooth.

A sidewall (108), is also applied externally onto the carcass ply (101), this sidewall extending, in an axially external position, from the bead (103) to the end of the belt structure (106).

A tread underlayer (111), may be placed between the belt structure (106) and the tread band (109). As represented in Fig. 1, the tread underlayer (111) may have uniform thickness. Alternatively, the tread underlayer (111) may have a variable thickness in the transversal direction. For example, the thickness may be greater near its outer edges than at a central zone. In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless run-flat tires, a first layer (112), generally known as a "liner", which provides the necessary impermeability to the inflation air of the tire, may also be provided in an inner position relative to the carcass ply (101).

In addition, a second layer (not shown in Fig. 1) generally known as a "under-liner", may be placed between the liner (112) and the carcass ply (101).

The run-flat tire (100) according to the present invention includes a bearing structure capable of bearing the vehicle load under a considerable or total loss of pressure. In particular, a sidewall insert (113) can be associated to each sidewall. In each side of the run-flat tire (100) the sidewall insert (113) extends radially between the relevant bead structure (103) and the corresponding lateral edge of the tread band (109). Each sidewall insert (113) can be realized in one or more portions and is placed in an axially internal or external position with respect to the carcass ply. For example, as represented in Fig. 1, the sidewall insert (113) is placed between the carcass ply (101) and the liner (112).

Alternatively, in the case more than one carcass ply is present, a sidewall insert (113) may be placed between two of said carcass plies (not represented in Fig. 1).

Alternatively, a sidewall insert (113) may be placed between the carcass ply and the sidewall (not represented in Fig. 1).

In another embodiment of the present invention (not represented) the sidewall insert provides, further to its structural support, the necessary impermeability to the inflation air of the tire. The sidewall insert is therefore placed in an inner position relative to the carcass ply (101) and no liner is placed inwardly in the sidewall portion.

More than one sidewall insert may be present as disclosed, for example, in United States Patent US 5,238,040, or in European Patent Application EP 943,466.

The bearing structure of the run flat tire according to the present invention includes, for each side of the run-flat tire (100), the bead structure (103) and the corresponding sidewall insert (113). The sidewall inserts (113), but preferably both the sidewall inserts (113) and the bead structures (103), include an elastomeric material incorporating diatomite particles, having preferred features disclosed above.

The present invention will be further illustrated below by means of a number of preparation examples of crosslinkable elastomeric compositions suitable to be used in bearing structures of a run flat tire, which are given for purely indicative purposes and without any limitation of this invention.

The samples of the following examples were evaluated according to the following tests and measurements.

The Mooney viscosity ML(1+4) at 100°C was measured according to Standard ISO 289-1:2005, on the non-crosslinked elastomeric compositions obtained as described below.

The tensile modulus (50% Modulus, and 100% Modulus), the tensile strength, the elongation at break, as well as the elongation at yield, were measured according to Standard ISO 37:2005, on samples of the elastomeric compositions described below crosslinked at 170°C, for 10 min.

The hardness in IRHD degrees (at 10°C, at 23°C or at 100°C) was measured according to Standard ISO 48:2007, on samples of the elastomeric compositions crosslinked at 170°C, for 10 min.

The dynamic mechanical properties were measured using an Instron dynamic device in the traction-compression mode according to the following methods. A test piece of the crosslinked elastomeric composition (crosslinked at 170°C, for 10 min) having a cylindrical form (length = 25 mm; diameter = 14 mm), compression-preloaded up to a 25% longitudinal deformation with respect to the initial length, and kept at the prefixed temperature (23°C, 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

The heat generation and flexing fatigue in compression were measured by means of a Goodrich Flexometer according to ASTM D 623 - 07. The test consisted in subjecting a specimen of rubber of definite size and shape to rapidly oscillating compressive stresses under controlled conditions. The temperature rise was measured. In particular, the temperature rise was measured to an equilibrium temperature.

In this test method, a definite compressive load is applied to a test specimen through a lever system having high inertia, while imposing on the specimen an additional high-frequency cyclic compression of definite amplitude. The increase in temperature at the base of the test specimen is measured with a thermocouple to provide a relative indication of the heat generated in flexing the specimen.

The standard test specimen, a cylinder having diameter of 17.8 mm and a height of 25 mm, was molded.

The test conditions were: stroke = 6.35 mm; Load (on Beam) = 216 N; Time = 30 min; Temperature = 23 °C. The test was terminated after 30 min at which time the final internal temperature of the sample was determined.

### Preparation of elastomeric compositions 1 to 7

The elastomeric compositions 1 to 7 given in Tables 1 to 3 were prepared as follows (the amounts of the various components are given in phr).

All the components, except Stearic acid, ZnO, Sulfur, accelerator (TBBS) and stabilizer (TMQ), were mixed together in an internal mixer (model Pomini PL 1.6) for about 4 min (1^{st} Step). As soon as the temperature reached 140±5°C, the elastomeric composition was discharged.

After at least 12 hours, Stearic acid, ZnO and TMQ were mixed with the 1^{st} step composition in an internal mixer of the type with tangential rotors (Banbury) (model Pomini PL 1.6) for about 3 min, up to a temperature of 120±5°C and then the elastomeric composition was discharged (2^{nd} step).

The sulfur and accelerator (TBBS), were then added and mixing was carried out in an open roll mixer (3^{rd} Step).

### EXAMPLE 1

**TABLE 1**

| SAMPLE | 1 (*) | 2 (*) | 3 (^) |
|---|---|---|---|
| ₁^{st} STEP | | | |
| NR | 50.00 | 50.00 | 50.00 |
| BR high CIS | 50.00 | 50.00 | 50.00 |
| X50S^{®} | 8.00 | 3.00 | 5.50 |
| ZEOSIL 1115 MP | 50.00 | | 25.00 |
| CelTix^{™} | | 50.00 | 25.00 |
| WAX | 1.00 | 1.00 | 1.00 |
| 6-PPD | 1.50 | 1.50 | 1.50 |

| 2^{nd} STEP | | | |
|---|---|---|---|
| Stearic Acid | 1.00 | 1.00 | 1.00 |
| ZnO | 3.75 | 3.00 | 3.75 |
| TMQ | 1.00 | 1.00 | 1.00 |

| 3^{rd} STEP | | | |
|---|---|---|---|
| TBBS | 4.00 | 4.00 | 4.00 |
| Sulphur | 2.00 | 2.00 | 2.00 |

| | | | |
|---|---|---|---|
| (*): comparison; (^): invention. NR: natural rubber (Standard Thai Rubber STR 20 - Thaiteck Rubber) BR: polybutadiene (Europrene Neocis® - Polimeri Europa) X50S^{®}: 1:1 mixture of bis[3-(triethoxysilyl)propyl]tetrasulfide and N330 carbon black (X50S^{®} - Evonik-Degussa); Zeosil^{®} 1165 MP: Silica (Rhodia); CelTix^{™}: diatomite particles having a BET surface area of 33.7 m²/g, a residue on a 325 Mesh sieve lower than 1% by weight with respect to the total weight of the diatomite particles, and an average maximum dimension of 10 µm (Celite Corporation); WAX: composition of microcrystalline wax (Antilux® 654 - Lanxess); 6-PPD (antioxidant): N-(1,3-dimethylbutyl)-N'-phenyl-p-phenylene-diamine (SantoflexTM 6PPD - Flexsys); Stearic Acid: STEARINA N (SOGIS) ZnO: Zinc oxide Rhenogran® ZnO-80 (RheinChemie); TMQ: (anti-aging): polymerized NAUGARD Q (CHEMTURA CORPORATION) TBBS: (accelerator): N-tert-butyl-2-benzothiazylsulfenamide (Vulkacit^{®} NZ/EGC - Lanxess); | | | |

Samples 1 2 and 3 were evaluated as described above and the results were summarized in the following Table 2.

**TABLE 2**

| Results | 1 (*) | 2 (*) | 3 (^) |
|---|---|---|---|
| GREEN PROPERTIES | | | |
| Mooney ML (1+4) 100°C | 75.2 | 55.1 | 63.1 |

| STATIC MECHANICAL PROPERTIES | | | |
|---|---|---|---|
| Tensile modulus 50% [MPa] | 1.65 | 1.9 | 1.75 |
| Tensile modulus 100% [MPa] | 2.96 | 3.96 | 3.61 |
| Tensile strength [MPa] | 12.28 | 8.89 | 12.8 |
| Elongation at break [%] | 295.09 | 222.5 | 326 |
| IRHD Hardness 23°C | 73.9 | 63.8 | 65.8 |
| Elastic yield [%] | 66 | 78.1 | 73.5 |

| DYNAMIC MECHANICAL PROPERTIES | | | |
|---|---|---|---|
| E' (23°C) | 7.049 | 5.621 | 6.161 |
| E' (70°C) | 6.668 | 5.689 | 6.151 |
| Tan delta (23°C) | 0.109 | 0.072 | 0.081 |
| Tan delta (70°C) | 0.077 | 0.045 | 0.056 |
| Needle T (Goodrich STD. °C) | 141.4 | 93.2 | 109 |

| | | | |
|---|---|---|---|
| (*): comparison; (^): invention. | | | |

### EXAMPLE 2

**TABLE 3**

| SAMPLE | 4 (*) | 5 (^) |
|---|---|---|
| 1^{st} STEP | | |
| NR | 50.00 | 50.00 |
| BR | 50.00 | 50.00 |
| X50S^{®} | | 1.50 |
| N550 | 50.00 | 25.00 |
| CelTix^{™} | | 25.00 |
| WAX | 1.00 | 1.00 |
| 6-PPD | 1.50 | 1.50 |

| 2^{nd} STEP | | |
|---|---|---|
| Stearic Acid | 1.00 | 1.00 |
| ZnO | 3.75 | 3.75 |
| TMQ | 1.00 | 1.00 |

| 3^{rd} STEP | | |
|---|---|---|
| TBBS 80 | 4.00 | 4.00 |
| Sulphur | 2.00 | 2.00 |

| | | |
|---|---|---|
| (*): comparison; (^): invention. NR: natural rubber (Standard Thai Rubber STR 20 - Thaiteck Rubber) BR: polybutadiene (Europrene Neocis@ - Polimeri Europa) X50S^{®}: 1:1 mixture of bis[3-(triethoxysilyl)propyl]tetrasulfide and N330 carbon black (X50S^{®} - Evonik-Degussa); N550: carbon black; Zeosil^{®} 1165 MP: Silica (Rhodia); CeITix^{™}: diatomite particles having a BET surface area of 33.7 m²/g, a residue on a 325 Mesh sieve lower than 1% by weight with respect to the total weight of the diatomite particles, and an average maximum dimension of 10 µm (Celite Corporation); WAX: composition of microcrystalline wax (Antilux® 654 - Lanxess); 6-PPD (antioxidant): N-(1,3-dimethylbutyl)-N'-phenyl-p-phenylene-diamine (SantoflexTM 6PPD - Flexsys); Stearic Acid: STEARINA N (SOGIS) ZnO Zinc oxide: Rhenogran® ZnO-80 (RheinChemie); TMQ: (anti-aging): polymerized NAUGARD Q (CHEMTURA CORPORATION) TBBS (accelerator): N-tert-butyl-2-benzothiazylsulfenamide (Vulkacit^{®} NZ/EGC - Lanxess); | | |

Samples 4 and 5 were evaluated as described above and the results were summarized in the following Table 4.

**TABLE 4**

| Results | 4 (*) | 5 (^) |
|---|---|---|
| GREEN PROPERTIES | | |
| Mooney ML (1+4) 100°C | 66.3 | 59.8 |

| STATIC MECHANICAL PROPERTIES | | |
|---|---|---|
| Tensile modulus 50% [MPa] | 1.94 | 1.96 |
| Tensile modulus 100% [MPa] | 3.97 | 4.18 |
| Tensile strength [MPa] | 12.23 | 11.73 |
| Elongation at break [%] | 249.3 | 265.4 |
| IRHD Hardness 23°C | 69.8 | 66.5 |
| Elongation at yield [%] | 73.5 | 76.3 |

| DYNAMIC MECHANICAL PROPERTIES | | |
|---|---|---|
| E' (23°C) | 6.461 | 6.315 |
| E' (70°C) | 6.429 | 6.452 |
| Tan delta (23°C) | 0.078 | 0.065 |
| Tan delta (70°C) | 0.055 | 0.044 |
| Needle T (Goodrich STD. °C) | 123.8 | 100.1 |

| | | |
|---|---|---|
| (*): comparison; (^): invention. | | |

### EXAMPLE 3

**TABLE 5**

| SAMPLE | 6 (*) | 7 (^) |
|---|---|---|
| 1^{st} STEP | | |
| IR | 50.00 | 50.00 |
| BR | 50.00 | 50.00 |
| X50S^{®} | 2.40 | 1.60 |
| N550 | 34.00 | 34.00 |
| ZEOSIL 1115 MP | 20.00 | |
| CelTix^{™} | | 20.00 |
| WAX | 1.00 | 1.00 |
| 6-PPD | 1.50 | 1.50 |

| 2^{nd} STEP | | |
|---|---|---|
| Stearic Acid | 1.00 | 1.00 |
| ZnO | 3.75 | 3.75 |
| TMQ | 1.00 | 1.00 |

| 3^{rd} STEP | | |
|---|---|---|
| TBBS | 4.00 | 4.00 |
| Sulphur | 2.30 | 2.30 |

| | | |
|---|---|---|
| (*): comparison; (^): invention. IR cis-1,4-polyisoprene (SKI3 - Nizhnekamskneftechim Export) BR: polybutadiene (Europrene Neocis® - Polimeri Europa) X50S^{®}: 1:1 mixture of bis[3-(triethoxysilyl)propyl]tetrasulfide and N330 carbon black (X50S^{®} - Evonik-Degussa); N550: carbon black; Zeosil^{®} 1165 MP: Silica (Rhodia); CelTix^{™}: diatomite particles having a BET surface area of 33.7 m²/g, a residue on a 325 Mesh sieve lower than 1% by weight with respect to the total weight of the diatomite particles, and an average maximum dimension of 10 µm (Celite Corporation); WAX: composition of microcrystalline wax (Antilux® 654 - Lanxess); 6-PPD (antioxidant): N-(1,3-dimethylbutyl)-N'-phenyl-p-phenylene-diamine (SantoflexTM 6PPD - Flexsys); Stearic Acid: STEARINA N (SOGIS) ZnO: Zinc oxide Rhenogran® ZnO-80 (RheinChemie); TMQ: (anti-aging): polymerized 2,2,4-trimethyl-1,2-dihydroquinoline polymer NAUGARD Q^{™} (CHEMTURA CORPORATION) TBBS (accelerator): N-tert-butyl-2-benzothiazylsulfenamide (Vulkacit^{®} NZ/EGC - Lanxess); | | |

Samples 6 and 7 were evaluated as described above and the results were summarized in the following Table 6.

**TABLE 6**

| Results | 6 (*) | 7 (^) |
|---|---|---|
| GREEN PROPERTIES | | |
| Mooney ML (1+4) 100°C | 65.8 | 52.2 |

| STATIC MECHANICAL PROPERTIES | | |
|---|---|---|
| Tensile modulus 50% [MPa] | 2.00 | 2.34 |
| Tensile modulus 100% [MPa] | 4.22 | 5.16 |
| Tensile strength [MPa] | 13.27 | 14.39 |
| Elongation at break [%] | 252.51 | 282.64 |
| IRHD Hardness 23°C | 71.0 | 70.5 |
| Elastic yield [%] | 76.3 | 80.7 |

| DYNAMIC MECHANICAL PROPERTIES | | |
|---|---|---|
| E' (23°C) | 6.99 | 7.29 |
| E' (70°C) | 6.93 | 7.32 |
| Tan delta (23°C) | 0.086 | 0.081 |
| Tan delta (70°C) | 0.065 | 0.060 |
| Needle T (Goodrich STD. °C) | 133.8 | 121.5 |

| | | |
|---|---|---|
| (*): comparison; (^): invention. | | |

Each of the comparative test above reported has been conducted with the aim to evaluate the behaviour and properties of a sample obtained by substituting an amount of filler with diatomite particles in comparison with a corresponding sample in which no substitution of filler have been effected.

A further comparative sample (2*) has been prepared by substituting the whole amount of filler (in particular silica) with diatomite particles, the results of this latter test require a separate discussion.

In each of the comparative tests (excluding sample 2), the samples suitable for the bearing structure of the run flat tire according to the present invention (Samples 3, 5, 7) showed a viscosity lower than that of comparative samples (respectively samples 1, 4, 6). A reduced viscosity in the non-crosslinked state means a better processability.

The static mechanical properties, in particular tensile moduli and tensile strength, as well as the elastic yield, were noticeably improved in the samples suitable for the bearing structure of the run flat tire according to the invention. Moreover, elongation at break showed a great improvement.

Above all, (excluding sample 2) the "needle temperature" recorded in Goodrich test was impressively improved in the samples suitable for the run flat tires according to the invention. The "needle temperature" is the internal temperature of the sample at the end of the test: it is particularly important as it reflects the behaviour of the compound under real conditions.

As a matter of fact, in the case of a run-flat tire running without pressure under the load of the car, the sidewall insert is heavily compressed at each tire revolution. The heat buildup is one of the main limitations to the service life of such a tire: heating and mechanical fatigue determine modulus decrease, which leads to higher deformation and still more heat dissipation, to the point that also thermal degradation onsets and finally the tire fails.

A low final internal temperature in Goodrich test as that obtained in the samples suitable for the present invention is thus taken as an indication that the compound would lead to high run-flat mileage when used as bearing structure.

Also the dynamical mechanical properties were positively affected. In particular, the reduction of tan delta for both temperatures confirmed the tendency to lower heat dissipation in dynamic conditions, evidenced under thermomechanical fatigue conditions in Goodrich test, of the crosslinked elastomeric products according to the invention.

Referring to the test performed on the sample 2, although the viscosity, the tensile moduli, the elastic yeld as well as tan delta and the Goodrich test were positively affected by the massive introduction of diatomite as filler, the drop of the tensile strength and elongation at break made the material according to sample 2 substantially useless to be included in a run flat tire.

A specimen of tyre of the invention, including a sidewall insert prepared from an elastomeric composition according to sample 7, (Tyre "INV") was manufactured and submitted to comparison tests with a comparison tyre including a sidewall insert prepared with an elastomeric composition according to sample 6 (Tyre "COMP").

Both the tyre of the invention and the comparison tyre had size 255/40 R18.

A car BMW E60 was first equipped with four pneumatic tyres of the invention and then with four pneumatic comparison tyres.

A run-flat test was performed for each set deflating completely the rear left tire and driving at approximately 80 Km/h on extra-urban regional roads till tire failure. The test was stopped after 216 km when no failure occurred.

The test was repeated twice for each tyre set with the results given in table 7.

**TABLE 7**

| | TIRE | MILEAGE | AVG |
|---|---|---|---|
| A | Tire COMP* (1st test) | 185 | 146 |
| | Tire COMP* (2nd test) | 107 | |
| B | Tire INV^ (1st test) | 161 | 169 |
| | Tire INV^ (2nd test) | 177 | |
| C | Tire COMP* (3rd test) | 216 | 166 |
| | Tire COMP* (4th test) | 116 | |
| D | Tire INV^ (3rd test) | 216 | 216 |
| | Tire INV^ (4th test) | 216 | |

| | | | |
|---|---|---|---|
| (*): comparison; (^): invention. | | | |

The average mileage in the first two tests (B) of the tire of the invention was 15% higher than the average mileage of the reference tire (A).

In the second two tests (D) the average mileage of the tire of the invention was 30% higher than the average mileage of the reference tire (C)

The average mileage of the tire of the invention was, on the whole, 23% higher that the average mileage of the reference tire, showing that the run-flat tire including at least sidewall inserts obtained by crosslinking a crosslinkable elastomeric composition comprising diatomite particles, showed non only better processability but also an improved durability.

## Claims

1. A run-flat tire comprising
- a carcass structure, having opposite lateral edges associated with respective right-hand and left-hand bead structures;
- a tread band applied in a radially external position with respect to said carcass structure;
- a pair of sidewalls applied laterally on opposite sides with respect to said carcass structure;
- a bearing structure including for each side of the tire, said bead structure cooperating in supporting the run-flat tire with at least one sidewall insert extending radially between said bead structure and the corresponding lateral edge of said tread band,
wherein said at least one sidewall insert includes a crosslinked elastomeric material obtained by crosslinking a crosslinkable elastomeric composition comprising:
(a) 100 phr of at least one elastomeric polymer;
(b) from 20 phr to 35 phr of diatomite particles having a BET surface area, in the range of from 10 m²/g to 90 m²/g;
(c) from 10 phr to 35 phr of at least one further reinforcing filler.

2. Run-flat tire according to claim 1, wherein said bead structure includes a bead filler and wherein both said at least one sidewall insert and the bead filler of said bead structure include a crosslinked elastomeric material obtained by crosslinking a crosslinkable elastomeric composition comprising:
(a) 100 phr of at least one elastomeric polymer;
(b) from 20 phr to 35 phr of diatomite particles having a BET surface area, in the range of from 10 m²/g to 90 m²/g;
(c) from 10 phr to 35 phr of at least one further reinforcing filler.

3. Run-flat tire according to claim 1 or 2, wherein said diatomite particles (b) are comprised in amounts of from 20 phr to 25 phr.

4. Run-flat tire according to any one of the preceding claims, wherein said diatomite particles have a BET surface area, in the range of from 10 m²/g to 40 m²/g_{.}

5. Run-flat tire according claim 4, wherein said diatomite particles have a BET surface area, in the range of from 30 m²/g to 40 m²/g.

6. Run-flat tire according to any one of preceding claims, wherein said diatomite particles (b) have an average maximum dimension in the range of from 2 µm to 15 µm.

7. Run-flat tire according to any one of preceding claims, wherein said diatomite particles (b) have a residue on a 325 Mesh sieve lower than or equal to 2.5% by weight with respect to the total weight of the diatomite particles.

8. Run-flat tire according to claim 7, wherein said diatomite particles have a residue on a 325 Mesh sieve lower than or equal to 1% by weight with respect to the total weight of the diatomite particles.

9. Run-flat tire according to claim 8, wherein said diatomite particles (b) have a residue on a 325 Mesh sieve lower than or equal to 0.5% by weight with respect to the total weight of the diatomite particles.

10. Run-flat tire according to any one of claims 1 to 9, wherein said at least one further reinforcing filler (c) may be selected from carbon black, silica, nanosized layered material having an individual layer thickness of from 0.01 nm to 30 nm, or mixture thereof.

11. Run-flat tire according to claim 10, wherein said at least one further reinforcing filler (c) is comprised in amounts of from 25 phr to 35 phr.

12. Run-flat tire according to claims 10 or 11, wherein said at least one reinforcing filler (c) is carbon black having surface area not lower than or equal to 20 m²/g_{.}

13. Run-flat tire according to claims 10 or 11, wherein said reinforcing filler (c) is silica selected from the group comprising: pyrogenic silica, precipitated amorphous silica, wet silica (hydrated silicic acid), dry silica (anhydrous silicic acid), fumed silica, or mixtures thereof.

14. Run-flat tire according to claim 13, wherein said silica reinforcing filler has a surface area of from 32 m²/g to 400 m²/g.

15. Run-flat tire according to any one of preceding claims, wherein said crosslinkable elastomeric composition further comprises at least one silane coupling agent (d).

16. Run-flat tire according to claim 15, wherein said silane coupling agent is represented by the following structural formula (I):
(R₂)₃Si-CₜH₂ₜ-X (I)
wherein R₂, which may be equal or different from each other, are alkyl groups, alkoxy groups, aryloxy groups or halogen atoms, provided that at least one of said groups R₂ is an alkoxy or aryloxy group; t is an integer of from 1 to 6 extremes included; X is a group selected from: nitroso, mercapto, amino, epoxide, vinyl, imide, chloro, -(S)ᵤCₜH₂ₜ-Si-(R₂)₃ or -S-COR₂ in which u and t are integers of from 1 to 6 extremes included and the groups R₂ are defined as above.

## Patentansprüche

1. Notlauf-Reifen, umfassend:
- eine Karkassenstruktur mit gegenüberliegenden Seitenkanten, die mit entsprechenden rechtsständigen und linksständigen Wulststrukturen assoziiert sind;
- ein Laufflächenband, das in einer radial außenliegenden Position in Bezug auf die Karkassenstruktur aufgebracht ist;
- ein Paar von Seitenwänden, die lateral an gegenüberliegenden Seiten in Bezug auf die Karkassenstruktur angebracht sind;
- eine Auflagestruktur, die für jede Seite des Reifens die Wulststruktur, die zum Stützen des Notlauf-Reifens mit mindestens einem Seitenwand-Einschub zusammenwirkt, der sich radial zwischen der Wulststruktur und der entsprechenden Seitenkante des Laufflächenbands erstrekt, einschließt,
worin der mindestens eine Seitenwand-Einschub ein vernetztes elastomeres Material einschließt, das durch Vernetzen einer vernetzbaren Elastomerzusammensetzung erhältlich ist, die folgendes umfasst:
(a) 100 phr mindestens eines elastomeren Polymers;
(b) von 20 bis 35 phr Diatomit-Teilchen mit einer BET-Oberfläche im Bereich von 10 m²/g bis 90 m²/g;
(c) von 10 phr bis 35 phr mindestens eines weiteren verstärkenden Füllstoffes.

2. Notlauf-Reifen gemäß Anspruch 1, worin die Wulststruktur einen Wulstfüllstoff einschließt und worin sowohl der mindestens eine Seitenwand-Einschub und der Wulstfüllstoff der Wulststruktur ein vernetzes elastomeres Material einschließt, das durch Vernetzen einer vernetzbaren elastomeren Zusammensetzung erhalten wird, die folgendes umfasst:
(a) 100 phr mindestens eines elastomeren Polymers;
(b) von 20 bis 35 phr Diatomit-Teilchen mit einer BET-Oberfläche im Bereich von 10 m²/g bis 90 m²/g;
(c) von 10 phr bis 35 phr mindestens eines weiteren verstärktenden Füllstoffes.

3. Notlauf-Reifen gemäß Anspruch 1 oder 2, worin die Diatomit-Teilchen (b) in Mengen von 20 phr bis 25 phr umfasst sind.

4. Notlauf-Reifen gemäß irgendeinem der vorhergehenden Ansprüche, worin die Diatomit-Teilchen eine BET-Oberfläche im Bereich von 10 m²/g bis 40 m²/g haben.

5. Notlauf-Reifen gemäß Anspruch 4, worin die Diatomit-Teilchen eine BET-Oberfläche im Bereich von 30 m²/g bis 40 m²/g haben.

6. Notlauf-Reifen gemäß irgendeinem der vorhergehenden Ansprüche, worin die Diatomit-Teilchen (b) eine mittlere Maximalausdehnung im Bereich von 2 µm bis 15 µm haben.

7. Notlauf-Reifen gemäß irgendeinem der vorhergehenden Ansprüche, worin die Diatomit-Teilchen (b) einen Rückstand auf einem 325 Mesh-Sieb von weniger oder gleich 2,5 Gew.% in Bezug auf das Gesamtgewicht der Diatomit-Teilchen haben.

8. Notlauf-Reifen gemäß Anspruch 7, worin die Diatomit-Teilchen einen Rückstand auf einem 325 Mesh-Sieb von weniger oder gleich 1 Gew.% in Bezug auf das Gesamtgewicht der Diatomit-Teilchen haben.

9. Notlauf-Reifen gemäß Anspruch 8, worin die Diatomit-Teilchen (b) einen Rückstand auf einem 325 Mesh-Sieb von weniger oder gleich 0,5 Gew.% in Bezug auf das Gesamtgewicht der Diatomit-Teilchen haben.

10. Notlauf-Reifen gemäß irgendeinem der Ansprüche 1 bis 9, worin der mindestens eine weitere verstärkende Füllstoff (c) aus Ruß, Siliziumdioxid, Schichtmaterial in Nano-Größe mit einer einzelnen Schichtdicke von 0,01 nm bis 30 nm oder Mischungen daraus ausgewählt sein kann.

11. Notlauf-Reifen gemäß Anspruch 10, worin der mindestens eine weitere verstärkte Füllstoff (c) in Mengen von 25 phr bis 35 phr umfasst ist.

12. Notlauf-Reifen gemäß Anspruch 10 oder 11, worin der mindestens eine verstärkende Füllstoff (c) Ruß mit einer Oberfläche von nicht weniger oder gleich 20 m²/g ist.

13. Notlauf-Reifen gemäß Anspruch 10 oder 11, worin der verstärkende Füllstoff (c) Siliziumdioxid ist, das aus der Gruppe ausgewählt ist, die pyrogenes Siliziumdioxid, gefälltes amorphes Siliziumdioxid, feuchtes Siliziumdioxid (hydratisierte Kieselsäure), trockenes Siliziumdioxid (wasserfreie Kieselsäure), pyrogene Kieselsäure oder Mischungen daraus umfasst.

14. Notlauf-Reifen gemäß Anspruch 13, worin der verstärkende Siliziumdioxidfüllstoff eine Oberfläche von 32 m²/g bis 400 m²/g hat.

15. Notlauf-Reifen gemäß irgendeinem der vorhergehenden Ansprüche, worin die vernetzbare Elastomerzusammensetzung weiterhin mindestens ein SilanKopplungsmittel (d) umfasst.

16. Notlauf-Reifen gemäß Anspruch 15, worin das SilanKopplungsmittel durch die folgende Strukturformel (I) dargestellt wird:
(R₂)₃Si-CₜH₂ₜ-X (I)
worin R₂, die gleich oder unterschiedlich voneinander sein können, Alkylgruppen, Alkoxygruppen, Aryloxygruppen oder Halogenatome sind, vorausgesetzt, dass mindestens eine der Gruppen R₂ eine Alkoxy- oder eine Aryloxygruppe ist; t eine ganze Zahl von 1 bis 6 einschließlich der Extremwerte ist; X eine Gruppe ausgewählt aus Nitroso, Mercapto, Amino, Epoxyid, Vinyl, Imid, Chloro, -(S)ᵤCₜH₂ₜ-Si-(R₂)₃ oder -S-COR₂ ist, worin u und t ganze Zahlen von 1 bis 6 einschließlich der Extremwerte sind und die Gruppen R₂ defniert sind wie oben.

## Revendications

1. Pneu à affaissement limité comprenant :
- une structure de carcasse, ayant bords latéraux opposés associés respectivement associés avec des structures de talon droite et gauche ;
- une bande de roulement appliquée en une position externe radialement par rapport à ladite structure de carcasse ;
- une paire de flancs appliquée latéralement sur des côtés opposés par rapport à ladite structure de carcasse ;
- une structure porteuse incluant pour chaque côté du pneu, ladite structure porteuse coopérant dans le soutien du pneu à affaissement limité avec au moins un insert de flanc s'étendant radialement entre ladite structure de talon et le bord latéral correspondant de ladite bande de roulement,
dans lequel ledit au moins un insert de flanc inclut un matériau élastomère réticulé obtenu par réticulation d'une composition élastomère réticulable comprenant :
(a) 100 parties par 100 parties de caoutchouc d'au moins un polymère élastomère ;
(b) entre 20 parties par 100 parties de caoutchouc et 35 parties par 100 parties de caoutchouc de particules de diatomite ayant une aire de surface BET dans l'intervalle de 10 m²/g à 90 m²/g ;
(c) entre 10 parties par 100 parties de caoutchouc et 35 parties par 100 parties de caoutchouc d'au moins une charge de renfort supplémentaire.

2. Pneu à affaissement limité selon la revendication 1, dans lequel ladite structure de talon inclut une charge de talon et dans lequel l'au moins un insert de flanc et la charge de talon de ladite structure de talon incluent tous deux un matériau élastomère réticulé obtenu par réticulation d'une composition élastomère réticulable comprenant :
(a) 100 parties par 100 parties de caoutchouc d'au moins un polymère élastomère ;
(b) entre 20 parties par 100 parties de caoutchouc et 35 parties par 100 parties de caoutchouc de particules de diatomite ayant une aire de surface BET dans l'intervalle de 10 m²/g à 90 m²/g ;
(c) entre 10 parties par 100 parties de caoutchouc et 35 parties par 100 parties de caoutchouc d'au moins une autre charge de renfort supplémentaire.

3. Pneu à affaissement limité selon la revendication 1 ou 2, dans lequel lesdites particules de diatomite (b) sont comprises dans des quantités entre 20 parties par 100 parties de caoutchouc et 25 parties par 100 parties de caoutchouc.

4. Pneu à affaissement limité selon l'une quelconque des revendications précédentes, dans lequel lesdites particules de diatomite ont une aire de surface BET, dans l'intervalle de 10 m²/g à 40 m²/g.

5. Pneu à affaissement limité selon la revendication 4, dans lequel lesdites particules de diatomite ont une aire de surface BET, dans l'intervalle de 30 m²/g à 40 m²/g.

6. Pneu à affaissement limité selon l'une quelconque des revendications précédentes, dans lequel lesdites particules de diatomite (b) ont une dimension maximale moyenne dans l'intervalle de 2 µm à 15 µm.

7. Pneu à affaissement limité selon l'une quelconque des revendications précédentes, dans lequel lesdites particules de diatomite (b) ont un résidu sur un tamis 325 Mesh inférieur ou égal à 2.5% en poids par rapport au poids total des particules de diatomite.

8. Pneu à affaissement limité selon la revendication 7, dans lequel lesdites particules diatomite (b) ont un résidu sur un tamis 325 Mesh inférieur ou égal à 1% par poids par rapport au poids total des particules de diatomite.

9. Pneu à affaissement limité selon la revendication 8, dans lequel lesdites particules de diatomite (b) ont un résidu sur un tamis 325 Mesh inférieur ou égal à 0.5% par poids en rapport au poids total des particules de diatomite.

10. Pneu à affaissement limité selon l'une quelconque des revendications 1 à 9, dans lequel ladite au moins une charge de renfort supplémentaire (c) peut être choisie parmi un noir de carbone, une silice, un matériau stratifié nanométrique ayant un épaisseur de couche individuelle de 0.01 nm à 30 nm, ou un mélange de ceux-ci.

11. Pneu à affaissement limité selon la revendication 10, dans lequel ladite au moins une charge de renfort (c) est comprise dans des quantités entre 25 parties par 100 parties de caoutchouc et 35 parties par 100 parties de caoutchouc.

12. Pneu à affaissement limité selon les revendications 10 ou 11, dans lequel ladite au moins une charge de renfort (c) est du noir de carbone ayant une aire de surface non inférieure ou égale à 20 m²/g.

13. Pneu à affaissement limité selon les revendications 10 ou 11, dans lequel ladite au moins une charge de renfort est une silice choisie dans le groupe comprenant : la silice pyrogénée, la silice amorphe précipitée, la silice humide (acide silicique hydraté), la silice sèche (acide silicique anhydre), la silice fumée, ou leurs mélange.

14. Pneu à affaissement limité selon la revendication 13, dans lequel ladite charge de renfort en silice a une aire de surface comprise entre 32 m²/g et 400 m²/g_{.}

15. Pneu à affaissement limité selon l'une quelconque des revendications précédentes, dans lequel ladite composition élastomère réticulable comprend en outre au moins un agent de couplage qui est un silane (d).

16. Pneu à affaissement limité selon la revendication 15, dans lequel ledit agent de couplage qui est un silane est représenté par la formule structurelle suivante (I) :
(R₂)₃Si-CₜH₂ₜ-X (I)
dans laquelle les R2, qui peuvent être identiques ou différents l'un de l'autre, sont des groupes alkyles, des groupes alcoxyles, des groupes aryloxys ou des atomes d'halogène, pourvu qu'au moins un desdits groupes R2 soit un groupe alkoxy ou aryloxy ; t est un entier entre 1 et 6, bornes comprises ; X est un groupe choisi parmi : nitroso, thio, amino, epoxyde, vinyle, imide, chloro, -(S)ᵤCₜH₂ₜ-Si-(R₂)₃ ou -S-COR₂ dans lequel u et t sont des entiers entre 1 et 6, bornes comprises et les groupes R2 sont définis comme dessus.
